**Europäisches Patentamt**

**European Patent Office**

**Office européen des brevets**

(11) Veröffentlichungsnummer: **0 415 034 A2**

# EUROPÄISCHE PATENTANMELDUNG

(21) Anmeldenummer: **90113028.6**

(22) Anmeldetag: **07.07.90**

(51) Int. Cl.5: **F16G 13/16**

(30) Priorität: **26.08.89 DE 3928234**

(43) Veröffentlichungstag der Anmeldung:
**06.03.91 Patentblatt 91/10**

(84) Benannte Vertragsstaaten:
**AT CH DE ES FR GB IT LI NL SE**

(71) Anmelder: **Kabelschlepp Gesellschaft mit beschränkter Haftung**
**Marienborner Strasse 75**
**W-5900 Siegen 1(DE)**

(72) Erfinder: **Moritz, Werner**
**Laaspher Strasse 31**
**W-5900 Siegen(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**W-4000 Düsseldorf 11(DE)**

(54) **Energieführungskette.**

(57) Gegenstand der Erfindung ist eine Energieführungskette mit einem teilbaren Steg (4), der aus wenigstens zwei Traversen (9,10), quer dazu zwischen diesen angeordneten Trennstegen (12) und zwischen diesen parallel zu den Traversen (9,10) verlaufenden Sprossen (20) besteht. Um die Variationsmöglichkeiten für die Abstände der Trennstege (12) und die Anordnung der Sprossen (20) zu vergrößern, wird vorgeschlagen, in den Trennstegen (12) Durchbrüche (16) anzuordnen und in diese Zapfen (18) zum Befestigen der Sprossen (20) einzusetzen.

Fig.2

EP 0 415 034 A2

## ENERGIEFÜHRUNGSKETTE

Die Erfindung betrifft eine Energieführungskette mit einem teilbaren Steg, der aus wenigstens zwei Traversen mit dazu quer angeordneten, diese verbindenden Trennstegen mit Durchbrüchen und parallel zu den Traversen angeordneten Sprossen besteht.

Aus der CH-PS 635 175 ist eine Energieführungskette mit Trennstegen und Querstegen bekannt, durch die die eingelegten Kabel oder dgl. auch bei Umlenkung der Kette in der neutralen Zone, also in der Mitte, gehalten werden. Die Querstege sind mittels Ausnehmungen oder Vorsprüngen an den Trennstegen befestigt.

Aus der DE-PS 22 55 283 ist ein teilbarer Steg für eine Energieführungskette bekannt, der aus zwei Traversen mit abgeflachtem Querschnitt und mehreren Trennstegen mit am oberen und unteren Ende mit Hinterschneidungen versehenen, angeschnittenen Ausnehmungen besteht, wobei die Traversen nach dem Einlegen in die Ausnehmungen durch Verdrehen um ihre Längsachse kraft- und formschlüssig mit den Trennstegen verspannbar sind. Dieser bekannte Trennsteg hat nur in einer Richtung voneinander getrennte Aufnahmeräume für die Energieleitungen.

Aus der DE-PS 37 09 953 ist ein Kettenglied für Energiezuführungsketten bekannt, dessen Steg aus zwei Traversen, quer dazu zwischen diesen eingesetzten Trennstegen und zwischen diesen parallel zu den Traversen angeordneten Sprossen besteht.

Die Verbindung zwischen den Traversen und den Trennstegen besteht aus in größeren Abständen in die Traversen eingelassenen Ausnehmungen, in welche die Trennstege mit ihren Enden eingesetzt werden. Die Verbindungen zwischen den Trennstegen und den Sprossen bestehen aus in größeren Abständen angeordneten Schwalbenschwanzführungen, in welche die Sprossen bei der Montage eingeschoben werden können. Diese Verbindungstechnik zwischen den Traversen, Trennstegen und Sprossen führt zu einem starren Raster für die Aufnahme der Energieleitungen, welches nachträglich nicht variiert werden kann.

Ferner ist aus der DE-PS 34 08 912 ein Kettenglied bekannt, in dem der Innenraum durch versetzbare Trennplatten variabel gestaltet wird. Dazu sind in einem Steg als Aufnahmen ausgebildete Langlöcher und in dem anderen Steg Bohrungen vorgesehen, in welche die Trennplatte mittels angeformten Steckelementen fixiert wird.

Davon ausgehend liegt der Erfindung die **Aufgabe** zugrunde, eine Energieführungskette mit einem teilbaren Steg zu schaffen, dessen Abstände der Trennstege und dessen Anordnung der Sprossen eine möglichst große Variationsmöglichkeit bieten und die auch nachträglich noch variiert werden können.

Als technische **Lösung** wird vorgeschlagen, daß zwischen den Traversen und den Trennstegen Lochleisten eingelegt und die Trennstege in ihren Halterungen mit Stiften zum Eingreifen in die Lochleiste versehen sind und daß in die Durchbrüche der Trennstege Steckteile zum Befestigen der Sprossen eingesetzt sind.

Dabei hat es sich als zweckmäßig erwiesen, die Sprossen mit einem flachen, C-förmigen Querschnitt auszubilden, der an einer Schmalseite mit einem Längsschlitz versehen ist und deshalb sowohl axial als auch quer mit Vorspannung auf die Zapfen aufgeschoben werden können. Zur Verbesserung der Verbindung zwischen den Zapfen und den Sprossen wird vorgeschlagen, die Zapfen an ihren Enden an beiden Seiten mit Noppen und die Sprossen mit dazu korrespondierenden Bohrungen zu versehen.

Die Zapfen können mit einer Querwand zur Anlage an den Trennstegen versehen sein. Diese Technik hat den Vorteil, daß benachbarte Sprossen auch in unterschiedlichen Stockwerken angeordnet werden können, ohne daß die der Befestigung in den Trennstegen dienenden Zapfen sich verschieben können.

In den nach dieser technischen Lehre ausgebildeten Trennstegen sind eine Vielzahl von Durchbrüchen in kurzen Abständen nebeneinander vorgesehen, so daß die Sprossen wahlweise sowohl in kleinen als auch in größeren Abständen voneinander mit den Zapfen befestigt werden können, und zwar sowohl bei der Vormontage des Steges als auch noch nachträglich, wenn der vormontierte Steg schon in ein Kettenglied der Energieführungskette eingebaut worden ist.

Eine erfindungsgemäß ausgebildete Energieführungskette hat einen einfach konstruierten und herstellbaren Trennsteg, der vielseitig variierbar und an die jeweiligen Bedürfnisse anpassbar ist. So können beispielsweise die Traversen in beliebiger Länge von einem entsprechend geformten Stangenmaterial abgeschnitten werden. Das gleiche gilt für die Sprossen und die Lochleisten. Bei den Trennstegen handelt es sich um aus Kunststoff gespritzte Formteile. Mit diesen Einzelelementen können die Stege für Standardgrößen der Energieführungskette vormontiert oder für Sonderanfertigungen auch erst im letzten Augenblick montiert werden. Es ist sogar möglich, die Abstände der Trennstege und Sprossen bei einer fertig montierten Energieführungskette nachträglich wieder zu ändern, wenn das gewünscht wird. Um die Abstände der Trennstege zu verändern, muß der Steg lediglich einseitig durch Verdrehen der Traverse geöffnet werden. Die Sprossen können ohne eine Öffnung des Steges innerhalb der durch die Anzahl der Durchbrüche vorgegebenen Variationsbreite versetzt werden.

Weitere Einzelheiten und Vorteile ergeben sich aus der nachfolgenden Beschreibung der zugehörigen Zeichnungen, in denen eine bevorzugte Ausführungsform einer Energieführungskette mit Steg dargestellt worden ist. In den Zeichnungen zeigen:

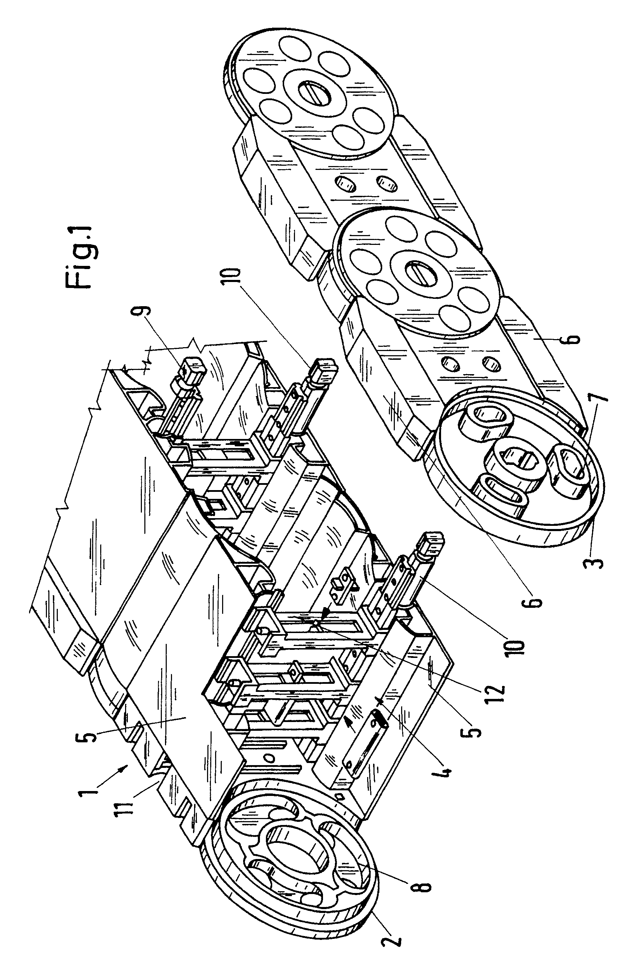

Fig. 1 ein Sprengbild eines Abschnittes einer teilweise vormontierten Energieführungskette in perspektivischer Darstellung;

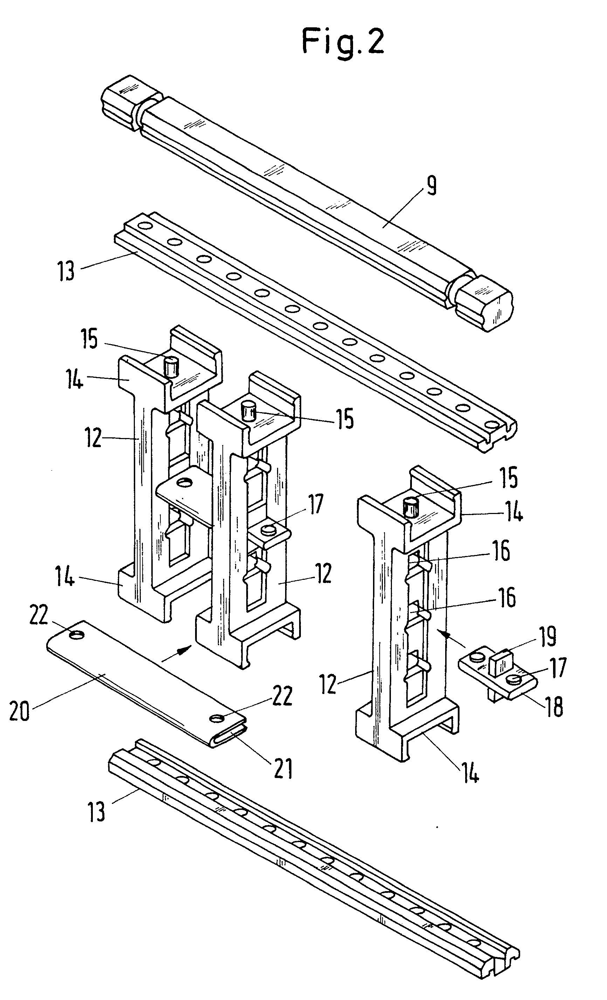

Fig. 2 ein Sprengbild eines Steges zur Veranschaulichung der einzelnen Konstruktionsteile in perspektivischer Darstellung.

Ein Kettenglied 1 einer Energieführungskette besteht aus zwei im Abstand voneinander und parallel zueinander angeordneten Kettenlaschen 2,3, einem dazwischen eingesetzten Steg 4 und in dem dargestellten Ausführungsbeispiel an der Ober- und Unterseite angeordneten Abdeckelementen 5 sowie Gleitkufen 6. Der gegenseitige Schwenkwinkel benachbarter Kettenglieder wird mit Anschlagnocken 7 an einem Ende der Kettenlaschen 2,3 begrenzt, die in Ausnehmungen 8 am anderen Ende einer benachbarten Kettenlasche 2,3 eingreifen.

Die Stege 4 werden gebildet aus zwei Traversen 9,10 mit abgeflachtem Querschnitt, die in mit Hinterschneidungen versehene Öffnungen 11 der Kettenlaschen 2,3 einsetzbar und durch Verdrehen um 90° in diesen kraft- und formschlüssig verspannbar sind. Zusammen mit den beiden Kettenlaschen 2,3 bilden die beiden Traversen 9,10 die tragende Konstruktion eines Kettengliedes 1.

Zwischen den Traversen 9,10 sind mehrere Trennstege 12 angeordnet, deren Abstände durch Lochleisten 13 festgelegt werden, die zwischen den Traversen 9,10 und den Trennstegen 12 liegen. Die Trennstege sind am oberen und unteren Ende mit U-förmigen Halterungen 14 versehen, in welchen Stifte 15 für den Eingriff in die Lochleisten 13 befestigt sind.

An ihren Schäften sind die Trennstege 12 mit einer Vielzahl übereinander angeordneter Durchbrüche 16 versehen, in die an ihren Enden mit Noppen 17 versehene Zapfen 18 einsetzbar sind. In der eingesetzten Lage liegen die Zapfen 18 mit einer Querwand 19 an den Schäften der Trennstege 12 an.

Auf den Zapfen 18 können Sprossen 20 befestigt werden, die einen flachen C-förmigen Querschnitt haben und an einer Schmalseite mit einem Längsschlitz 21 versehen sind. Die Sprossen 20 können sowohl in axialer Richtung als auch quer dazu auf die Zapfen 18 aufgeschoben werden und umfassen diese mit geringer Vorspannung. Zu diesem Zweck ist der Abstand zwischen den Profilschenkeln einer Sprosse 20 geringfügig kleiner als die Dicke der Zapfen 18. Am Ende jeder Sprosse 20 sind Bohrungen 22 vorgesehen, welche die Noppen 17 an den Zapfen 18 übergreifen.

Zur Montage eines Kettengliedes 1 wird zunächst eine Lochleiste 13 und eine Traverse 9 oder 10 in eine entsprechende Führung eines Abdeckelementes 5 eingeschoben. Anschließend werden mit diesem zusammengesetzten Element zwei Kettenlaschen 2,3 verbunden. Danach werden die Trennstege 12 im gewünschten Abstand nebeneinander angeordnet. Danach wird die zweite Lochleiste 13 und die zweite Traverse 9 oder 10 in das zweite Abdeckelement 5 eingeschoben und das Element mit den Kettenlaschen 2,3 verspannt. Danach können dann die Sprossen 20 in der gewünschten Anzahl zwischen den Trennstegen 12 angeordnet werden. Dazu werden zunächst die Zapfen 18 in die entsprechenden Durchbrüche 16 eingeschoben und dann die zugehörige Sprosse quer dazu aufgeschoben. Eine Demontage der Sprossen 20 ist möglich, wenn der Querschnitt durch Einführen eines Schraubenziehers in den Längsschlitz 21 etwas geöffnet wird.


Bezugszeichenliste

1 Kettenglied
2 Kettenlasche
3 Kettenlasche
4 Steg
5 Abdeckelement
6 Gleitkufen
7 Anschlagnocken
8 Ausnehmungen
9 Traverse
10 Traverse
11 Öffnung
12 Trennsteg
13 Lochleiste
14 Halterung
15 Stift
16 Durchbruch
17 Noppe
18 Zapfen
19 Querwand
20 Sprosse
21 Längsschlitz
22 Bohrung


**Ansprüche**

1. Energieführungskette mit einem teilbaren Steg (4), der aus wenigstens zwei Traversen (9,10) mit dazu quer angeordneten, diese verbindenden Trennstegen (12) mit Durchbrüchen (16) und parallel zu den Traversen (9,10) angeordneten Sprossen (20) besteht,

**dadurch gekennzeichnet,**

daß zwischen den Traversen (9,10) und den Trennstegen (12) Lochleisten (13) eingelegt und die Trennstege (12) in ihren Halterungen (14) mit Stiften (15) zum Eingreifen in die Lochleiste (13) versehen sind und

daß in die Durchbrüche (16) der Trennstege (12) Steckteile (18) zum Befestigen der Sprossen (20) eingesetzt sind.

2. Energieführungskette nach Anspruch 1, dadurch gekennzeichnet, daß die Sprossen (20) einen flachen C-förmigen Querschnitt mit einem Längsschlitz (21) haben und sowohl axial als auch quer auf die Steckteile (18) aufschiebbar sind.

3. Energieführungskette nach den Ansprüchen 1 und 2, dadurch gekennzeichnet, daß die Steckteile (18) an ihren Enden Noppen (17) zum Einschnappen in Bohrungen (22) der Sprossen (20) haben.

4. Energieführungskette nach den Ansprüchen 1 bis 3, dadurch gekennzeichnet, daß die Steckteile (18) mit einer Querwand (19) zur Anlage an den Trennstegen (12) versehen sind.

5. Energieführungskette nach den Ansprüchen 1 bis 4, dadurch gekennzeichnet, daß die Durchbrüche (16) kleiner als die Querwände (19) sind und eine Ausnehmung für die Noppen (17) der Steckteile (18) haben.

Fig.1

# Fig.2